# EUROPÄISCHE PATENTSCHRIFT

(11) **EP 0 649 005 B1**
(45) Veröffentlichungstag und Bekanntmachung des Hinweises auf die Patenterteilung: **23.04.1997**
(21) Anmeldenummer: 94112235.0
(22) Anmeldetag: 04.08.1994
(51) Int. Cl.: G01F 1/58

(54) **Magnetisch-induktive Durchflussaufnehmer**
Electromagnetic flow sensors
Capteurs de débimètre électromagnétique

(30) Priorität: 14.10.1993 EP 93810721
(43) Veröffentlichungstag der Anmeldung: 19.04.1995
(73) Patentinhaber: Endress + Hauser Flowtec AG, CH-4153 Reinach BL 1 (CH)
(72) Erfinder: Zingg, Thomas Dr. phil., CH-4055 Basel, BS (CH)
(74) Vertreter: Morstadt, Volker, Dipl.-Ing.

(56) Entgegenhaltungen:
- EP-A- 0 309 932
- WO-A-91/11731
- DE-B- 2 040 682
- FR-A- 2 558 251
- US-A- 4 470 309
- PATENT ABSTRACTS OF JAPAN vol. 13, no. 422 (P-933) 20. September 1989 & JP-A-01 155 216 (AICHI TOKEI DENKI CO. LTD.)

## Beschreibung

Die Erfindung betrifft magnetisch-induktive Durchflußaufnehmer mit einem von einem zu messenden, elektrisch leitfähigen Fluid durchströmten Meßrohr, dessen Nennweite größer als 200 mm ist. Als Durchflußaufnehmer wird für die Zwecke der Erfindung der im wesentlichen mechanische Teil eines magnetisch-induktiven Durchflußmessers ohne die Elektroden-Spannungs-Auswerte-Elektronik und ohne die Spulenstrom-Generatorschaltung bezeichnet. Solche magnetisch-induktive Durchflußaufnehmer nutzen bekanntlich das Faraday'sche Induktionsgesetz aus.

In der US-A 44 70 309 sind verschiedenen Ausführungsformen magnetisch-induktiver Durchflußaufnehmer beschrieben
- mit einem von einem zu messenden, elektrisch leitfähigen Fluid durchströmten, innen mit einer Isolierschicht ausgekleideten Metall-Meßrohr,
   -- das mindestens zwei Meß-Elektroden aufweist, und
   -- an dem Mittel zum Erzeugen eines das Meßrohr durchsetzenden Magnetfelds angeordnet sind, die umfassen:
      --- außerhalb der Außenmantelfläche des Meßrohrs diametral einander gegenüberliegende Spulen,
      --- Spulenkerne, und
      --- daran angeformte Polschuhe, die bis zur Außenmantelfläche des Meßrohrs reichen oder dort aufsitzen, sowie
- mit einem die Spulen und die Spulenkerne mit den Polschuhen umgebenden Gehäuse mit magnetischer Abschirmwirkung, das auch zum Schließen des Magnetkreises, also auch als magnetische Rückführung, dient.

In der DE-B 20 40 682 ist ferner ein magnetisch-induktiver Durchflußaufnehmer beschrieben
- mit einem von einem zu messenden, elektrisch leitfähigen Fluid durchströmten, innen mit einer Isolierschicht ausgekleideten Metall-Meßrohr,
   -- das mindestens zwei Meß-Elektroden aufweist, und
   -- an dem Mittel zum Erzeugen eines das Meßrohr durchsetzenden Magnetfelds angeordnet sind, die umfassen:
      --- außerhalb der Außenmantelfläche des Meßrohrs diametral einander gegenüberliegende Sattelspulen und
      --- ein den Zentralteil der Sattelspulen vollständig umschließendes Blechpaket zum Schließen des Magnetkreises als magnetische Rückführung.

In der US-A 47 74 844 ist des weiteren ein magnetisch-induktiver Durchflußaufnehmer beschrieben
- mit einem von einem zu messenden, elektrisch leitfähigen Fluid durchströmten Kunststoff-Meßrohr,
   -- das mindestens zwei Meß-Elektroden aufweist,
   -- an dem Mittel zum Erzeugen eines das Meßrohr durchsetzenden Magnetfelds angeordnet sind, die auf der Außenmantelfläche des Meßrohrs diametral einander gegenüberliegende Sattelspulen mit Spulenkernen umfassen, und
- mit einem die Sattelspulen und Spulenkerne umgebenden Gehäuse mit magnetischer Abschirmwirkung, das auch zum Schließen des Magnetkreises, also auch als magnetische Rückführung, dient.

In der WO-A 91/11731 ist schließlich ein magnetisch-induktiver Durchflußaufnehmer beschrieben
- mit einem von einem zu messenden, elektrisch leitfähigen Fluid durchströmten Isolierstoff-Meßrohr,
   -- das mindestens zwei Meß-Elektroden aufweist,
   -- an dem Mittel zum Erzeugen eines das Meßrohr durchsetzenden Magnetfelds angeordnet sind, die auf der Außenmantelfläche des Meßrohrs diametral einander gegenüberliegende Sattelspulen mit Spulenkernen und daran zu beiden Spulenseiten angeformten, im Bereich der Meß-Elektroden jeweils einen Luftspalt bildenden, in Polschuhen endenden magnetischen Rückführ-Blechpaketen umfassen,
      --- zwischen welchen Polschuhen im Bereich der Meß-Elektroden ein zum Magnetfeld entgegengesetzt gerichtetes Kompensationsmagnetfeld erzeugt wird.

Die Herstellkosten derartiger magnetisch-induktiver Durchflußaufnehmer nehmen zu großen Nennweiten hin, insb. oberhalb von 200 mm bis hin zu 2000 mm, besonders deswegen überproportional zu, weil zur Erzielung einer ausreichenden Magnetfeldstärke die Spulen und die Spulenkerne/Polschuhe bzw. die Sattelspulen/Spulenkerne entsprechend groß dimensioniert werden müssen, was zu großen Kupfermengen für die Spulen, insb. für die Sattelspulen, und entsprechend großen Materialmengen für die Spulenkerne/Polschuhe führt.

Ein Ziel der Erfindung ist es daher, magnetisch-induktive Durchflußaufnehmer mit Spulen und Spulenkernen/Polschuhen konstruktiv so zu vereinfachen, daß dadurch die Herstellkosten im Nennweitenbereich oberhalb von 200 mm beträchtlich sinken.

Die erste Variante der Erfindung besteht daher in einem magnetisch-induktiven Durchflußaufnehmer
- mit einem von einem zu messenden, elektrisch leitfähigen Fluid durchströmten, nicht-ferromagnetischen, innen mit einer Isolierschicht ausgekleideten Metall-Meßrohr,
   -- dessen Nennweite 200 mm bis 700 mm beträgt,
   -- das mindestens zwei Meß-Elektroden aufweist, und
   -- an dem Mittel zum Erzeugen eines das Metall-Meßrohr durchsetzenden Magnetfelds angeordnet sind, die umfassen:
      --- an der Außenmantelfläche des Metall-Meßrohrs diametral einander gegenüberliegende, nicht-sattelförmige Spulen,
      --- Spulenkerne,
      --- Polschuhe aus weichmagnetischem Material, die beidseits der jeweiligen nicht-sattelförmigen Spule in Umfangskreis-Richtung entweder auf der Außen- oder der Innenmantelfläche des Metall-Meßrohrs als Polbleche oder als in das Metall-Meßrohr eingesetzte Polbereiche unter Einhaltung eines ausreichenden gegenseitigen Abstands ihrer Enden verlaufen,
      --- entweder je ein auf jeweils einer Seite der Spulen und der Polbleche bzw. -bereiche angeordnetes, auf der Außen- oder der Innenmantelfläche des Metall-Meßrohrs aufliegendes, dieses vollständig umfassendes weichmagnetisches Rückführungsblech
      --- oder je einen auf jeweils einer Seite der Spulen und der Polbleche bzw. -bereiche in das Metall-Meßrohr eingesetzten, dieses vollständig umfassenden weichmagnetischen Rückführungsbereich,
         ---- welche Rückführungsbleche bzw. -bereiche jeweils über die Spulenkerne mit den Polblechen bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

Die zweite Variante der Erfindung besteht ferner in einem magnetisch-induktiven Durchflußaufnehmer
- mit einem von einem zu messenden, elektrisch leitfähigen Fluid durchströmten Keramik-Meßrohr bzw. Kunststoff-Meßrohr,
   -- dessen Nennweite 200 mm bis 700 mm beträgt,
   -- das mindestens zwei Meß-Elektroden aufweist, und
   -- an dem Mittel zum Erzeugen eines das Keramik-Meßrohr bzw. das Kunststoff-Meßrohr durchsetzenden Magnetfelds angeordnet sind, die umfassen:
      --- an der Außenmantelfläche des Keramik-Meßrohr bzw. des Kunststoff-Meßrohrs diametral einander gegenüberliegende, nicht-sattelförmige Spulen,
      --- Spulenkerne,
      --- Polschuhe aus weichmagnetischem Material, die beidseits der jeweiligen Spule in Umfangskreis-Richtung
         ---- entweder in das Kunststoff-Meßrohr als Polbereiche eingebettet sind
         ---- oder auf der Außenmantelfläche des Keramik-Meßrohr bzw. des Kunststoff-Meßrohrs als Polbleche verlaufen
         ---- oder als dessen magnetisch leitfähige Polbereiche verlaufen und deren Enden einen ausreichenden gegenseitigen Abstands einhalten,
      --- entweder je ein auf jeweils einer Seite der Spulen und der Polbleche bzw. -bereiche in das Kunststoff-Meßrohr eingebettetes oder auf der Außenmantelfläche des Keramik-Meßrohr bzw. des Kunststoff-Meßrohrs aufliegendes weichmagnetisches Rückführungsblech
      --- oder je einen auf jeweils einer Seite der Spulen und der Polbleche bzw. -bereiche angeordneten, einen weichmagnetisch leitfähigen Abschnitt des Keramik-Meßrohrs bzw. des Kunststoff-Meßrohrs bildenden Rückführungsbereich,

      ---- welche Rückführungsbleche bzw. -bereiche jeweils über die Spulenkerne mit den Polblechen bzw. -bereichen magnetisch gekoppelt sind und das Keramik-Meßrohr bzw. das Kunststoff-Meßrohr vollständig umfassen, und
- mit einer die Spulen und/oder die Spulenkerne und/oder die Polbleche bzw. -bereiche und/oder die Rückführungsbleche bzw. -bereiche umgebenden Umhüllung.

Die dritte Variante der Erfindung besteht ferner in einem magnetisch-induktiven Durchflußaufnehmer
- mit einem von einem zu messenden, elektrisch leitfähigen Fluid durchströmten, nicht-ferromagnetischen, innen mit einer Isolierschicht ausgekleideten Metall-Meßrohr,
   -- dessen Nennweite größer als 500 mm ist,
   -- das mindestens zwei Meß-Elektroden aufweist, und
   -- an dem Mittel zum Erzeugen eines das Metall-Meßrohr durchsetzenden Magnetfelds angeordnet sind, die umfassen:
      --- an der Außenmantelfläche des Metall-Meßrohrs diametral einander gegenüberliegende, nicht-sattelförmige Paare von Teilspulen,
         ---- deren jeweilige Achsen fluchten und parallel zur Achse des Metall-Meßrohrs verlaufen,
      --- pro Teilspule einen U-förmigen Spulenkern,
         ---- auf dessen jeweiligen seine Schenkel verbindenden Steg die jeweilige Teilspule gewickelt ist,
      --- Polschuhe aus weichmagnetischem Material, die beidseits des jeweiligen Paares von Teilspulen in Umfangskreis-Richtung entweder auf der Außen- oder der Innenmantelfläche des Metall-Meßrohrs als Polbleche oder als in das Metall-Meßrohr eingesetzte Polbereiche unter Einhaltung eines ausreichenden gegenseitigen Abstands ihrer Enden verlaufen,
      --- entweder je ein auf jeweils einer Seite der Spulen und der Polbleche bzw. -bereiche angeordnetes, auf der Außen- oder der Innenmantelfläche des Metall-Meßrohrs aufliegendes, dieses vollständig umfassendes weichmagnetisches Rückführungsblech
      --- oder je einen auf jeweils einer Seite der Paare von Teilspulen und der Polbleche bzw. -bereiche in das Metall-Meßrohr eingesetzten, dieses vollständig umfassenden weichmagnetischen Rückführungsbereich,
         ---- welche Rückführungsbleche bzw. -bereiche jeweils über die Spulenkerne mit den Polblechen bzw. -bereichen magnetisch derart gekoppelt sind, daß

         ----- die jeweiligen, einander zugewandten Schenkel der Spulenkerne mit den Polblechen bzw. -bereichen und die jeweiligen, voneinander abgewandten Schenkel mit den Rückführungsblechen bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

Die vierte Variante der Erfindung besteht schließlich in einem magnetisch-induktiven Durchflußaufnehmer
- mit einem von einem zu messenden, elektrisch leitfähigen Fluid durchströmten Keramik-Meßrohr bzw. Kunststoff-Meßrohr,
   -- dessen Nennweite größer als 500 mm ist,
   -- das mindestens zwei Meß-Elektroden aufweist, und
   -- an dem Mittel zum Erzeugen eines das Keramik- Meßrohr bzw. das Kunststoff-Meßrohr durchsetzenden Magnetfelds angeordnet sind, die umfassen:
      --- an der Außenmantelfläche des Keramik-Meßrohr bzw. des Kunststoff-Meßrohrs diametral einander gegenüberliegende, nicht-sattelförmige Paare von Teilspulen,
         ---- deren jeweilige Achsen fluchten und parallel zur Achse des Keramik-Meßrohr des Kunststoff-Meßrohrs verlaufen,
      --- pro Teilspule einen U-förmigen Spulenkern,
         ---- auf dessen jeweiligen seine Schenkel verbindenden Steg die jeweilige Teilspule gewickelt ist,
      --- Polschuhe aus weichmagnetischem Material, die beidseits des jeweiligen Paares von Teilspulen in Umfangskreis-Richtung
         ---- entweder in das Kunststoff-Meßrohr als Polbereiche eingebettet sind
         ---- oder auf der Außenmantelfläche des Keramik-Meßrohr bzw. des Kunststoff-Meßrohrs als Polbleche verlaufen
         ---- oder als dessen magnetisch leitfähige Polbereiche verlaufen und deren Enden einen ausreichenden gegenseitigen Abstands einhalten,
      --- entweder je ein auf jeweils einer Seite des Paares von Teilspulen und der Polbleche bzw. -bereiche in das Kunststoff-Meßrohr eingebettetes oder auf der Außenmantelfläche des Keramik-Meßrohr bzw. des Kunststoff-Meßrohrs aufliegendes weichmagnetisches Rückführungsblech
      --- oder je einen auf jeweils einer Seite des Paares von Teilspulen und der Polbleche bzw. -bereiche angeordneten, einen weichmagnetisch leitfähigen Abschnitt des Keramik-Meßrohrs bzw. des Kunststoff-Meßrohrs bildenden Rückführungsbereich,
         ---- welche Rückführungsbleche bzw. -bereiche das Keramik-Meßrohr bzw. das Kunststoff-Meßrohr vollständig umfassen und jeweils über die Spulenkerne mit den Polblechen bzw. -bereichen magnetisch derart gekoppelt sind, daß

         ----- die jeweiligen, einander zugewandten Schenkel der Spulenkerne mit den Polblechen bzw. -bereichen und die jeweiligen, voneinander abgewandten Schenkel mit den Rückführungsblechen bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

Die magnetisch-induktiven Durchflußaufnehmer der Erfindung unterscheiden sich somit vorteilhaft von den bisher üblichen magnetisch-induktiven Durchflußaufnehmern u.a. in folgenden Punkten:
- Die vorhandene Umhüllung dient nicht mehr als magnetische Rückführung, sondern hat nur noch die mechanische Schutz- und im Falle eines Metallgehäuses gegebenenfalls die magnetische Abschirmfunktion,
- Polschuhe und magnetische Rückführung sind durch Bleche bzw. Blechpakete bzw. Polbereiche realisiert, die auf einer der Mantelflächen des Meßrohrs aufliegen bzw. einen Teil davon bilden, so daß für Polschuhe und magnetische Rückführung nur der durch den jeweiligen Durchmesser des Meßrohrs bedingte und damit geringstmögliche Materialverbrauch entsteht,
- die Spulen benötigen nur vertretbar wenig, aber sehr viel weniger Kupfer als die vorbeschriebenen Sattelspulen,
- das Magnetsystem kann sehr leicht und einfach montiert werden, und
- die Ausdehnung des Magnetfelds in Richtung der Achse des Meßrohrs ist gegenüber den üblichen Anordnungen verkürzt, so daß das Meßrohr ebenfalls kürzer als üblich gemacht und somit im Sinne der Kostenminderung zu den genannten Nennweiten hin zusätzlich zu der Kupfer-Verringerung auch immer mehr Meßrohr-Material eingespart werden kann. Bei Sattelspulen muß nämlich die Meßrohrlänge mindestens das 1,5-fache der Nennweite betragen, während bei der Erfindung nur noch das 1,3-fache der Nennweite nötig ist.

Nach einer bevorzugten Ausgestaltung der ersten oder der zweiten Variante der Erfindung sind vorgesehen:
- zwei Spulen, deren jeweilige Achse senkrecht zur Achse des Meßrohrs verläuft,
- pro Spule zwei U-förmige Spulenkerne,
   -- deren Schenkel-Länge wenig größer als die Länge der Spulen ist,
   -- deren jeweils einer Schenkel unter Einhaltung eines gegenseitigen Abstands in der jeweiligen Spule angeordnet und mit den Polblechen bzw. -bereichen magnetisch gekoppelt ist und
   -- deren jeweils nicht in der jeweiligen Spule steckender Schenkel mit den Rückführungsblechen bzw. -bereichen magnetisch gekoppelt ist.

Nach einer anderen bevorzugten Ausgestaltung der in diesem Sinne ausgestalteten ersten oder zweiten Variante der Erfindung sowie nach der dritten oder der vierten Variante können die zu einer Spule gehörenden beiden U-förmigen Spulenkerne zu einem einzigen E-förmigen Spulenkern vereinigt sein.

Nach einer weiteren bevorzugten Ausgestaltung jeder der vier Varianten der Erfindung sind die Polbleche in der Nähe der Spulen unterbrochen und die dadurch gebildeten Enden aufgebogen, und diese Enden sind mit dem jeweiligen in der Spule steckenden Schenkel des jeweiligen Spulenkerns magnetisch gekoppelt.

Nach einer weiteren bevorzugten Ausgestaltung der vier Varianten der Erfindung können die Rückführungsbleche in der Nähe der Spulen unterbrochen und die dadurch gebildeten Enden aufgebogen und diese Enden mit dem jeweiligen nicht in der Spule steckenden Schenkel des jeweiligen Spulenkerns magnetisch gekoppelt sein.

Schließlich kann die Umhüllung bei allen vier Varianten und bei den erwähnten Ausgestaltungen der Erfindung ein Metallgehäuse, vorzugsweise mit magnetischer Abschirmwirkung sein.

Die Erfindung wird nun anhand der Zeichnung näher erläutert, in der schematisch Ausführungsbeispiele der Erfindung gezeigt und gleiche Teile mit denselben Bezugszeichen bezeichnet sind.
- Fig. 1: zeigt in Seitenansicht einen magnetisch-induktiven Durchflußaufnehmer für Nennweiten zwischen 200 mm und 700 mm mit zwei Spulen des Magnetsystems,
- Fig. 2: zeigt in Seitenansicht einen magnetisch-induktiven Durchflußaufnehmer für größere Nennweiten als 500 mm mit vier Teilspulen des Magnetsystems,
- Fig. 3: zeigt in schematischer Schnittansicht eine Variante der magnetischen Kopplung zwischen Polblechen und Spulenkernen,
- Fig. 4: zeigt in schematischer Schnittansicht die Anordnung von Polblechen auf der Außenmantelfläche des Meßrohrs,
- Fig. 5: zeigt in schematischer Schnittansicht die Anordnung von Polbereichen des Meßrohrs, und
- Fig. 6: zeigt in schematischer Schnittansicht die Anordnung von Polblechen auf der Innenmantelfläche eines Metall-Meßrohrs bzw. die in Kunststoff eingebettete Anordnung von Polblechen eines Kunststoff-Meßrohrs.

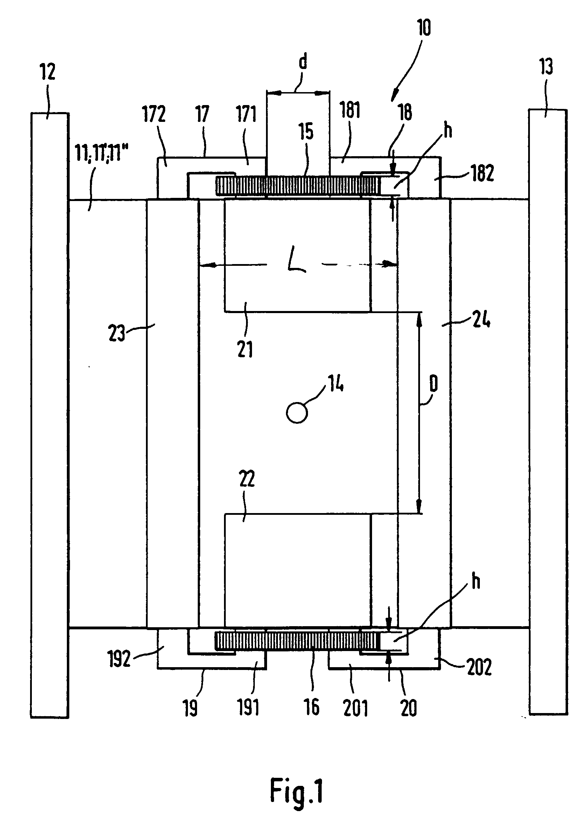

Der in Fig. 1 schematisch gezeigte magnetisch-induktive Durchflußaufnehmer 10 für den Nennweitenbereich zwischen 200 mm und 700 mm, insb. zwischen 350 mm und 600 mm, hat ein von einem zu messenden, elektrisch leitfähigen Fluid durchströmtes Meßrohr. Dieses kann als Metall-Meßrohr 11 aus einem nicht-ferromagnetischen Metall, z.B. rostfreiem Stahl, als Keramik-Meßrohr 11' aus geeigneter Keramik, z.B. aus Aluminiumoxid-Keramik, oder als Kunststoff-Meßrohr 11'' aus einem geeigneten Kunststoff, z.B. Hartgummi, bestehen.

Ist das Meßrohr ein Metall-Meßrohr 11, so ist es innen mit einer Isolierung 9, z.B. aus Polyfluorethylen, insb. Polytetrafluorethylen, aus Weichgummi oder aus Hartgummi, beschichtet, damit die vom Magnetfeld induzierten Signale nicht vom Metall-Meßrohr 11 kurzgeschlossen werden, vgl. auch die Fig. 4a, 5a, 6a.

In Fig. 1 ist das nicht-ferromagnetische Meßrohr 11 mit Flanschen 12, 13 versehen, über die der Meßwertaufnehmer 10 in eine nicht gezeigte Rohrleitung fluid-dicht einsetzbar ist. Anstatt der Flansche sind auch Schraub- oder Schlauchverbindungen möglich, wie sie in der Sanitär- und in der Lebensmittelindustrie üblich sind. Auch flanschlose Verbindungen durch axiale Pressung zwischen Rohrleitung und Meßrohr sind möglich, insb. bei Keramik-Meßrohren 11' oder Kunststoff-Meßrohren 11''.

In oder an der Wand des Meßrohrs sind, bevorzugt zwei, Meß-Elektroden angeordnet, die einander z.B. diametral gegenüberliegen und von denen in Fig. 1 nur die eine Meß-Elektrode 14 sichtbar ist. Sollen die Meß-Elektroden mit dem Fluid in Berührung kommen, sollen sie also galvanische Meß-Elektroden sein, so sind sie in jeweils einer Bohrung der Wand des Meßrohrs - bei einem Metall-Meßrohr 11 gegen es isoliert - eingesetzt. Im Falle kapazitiver Meß-Elektroden ist keine Berührung mit dem Fluid vorgesehen, und die Meß-Elektroden sind daher vom Fluid isoliert angeordnet. Es können noch weitere Meß-Elektroden und auch Erdungs-Elektroden sowie Überwachungs-Elektroden, z.B. für den Füllstand, vorgesehen werden.

Am Meßrohr sind ferner Mittel zum Erzeugen eines es, vorzugsweise senkrecht zum Elektroden-Verbindungs-Durchmesser und senkrecht zur Achse des Meßrohrs, durchsetzenden Magnetfelds angeordnet. Diese Mittel umfassen zwei nicht-sattelförmige, also ebene, Spulen 15, 16, die möglichst nahe an der Außenmantelfläche des Meßrohrs 11 diametral einander gegenüberliegen, und pro Spule zwei U-förmige Spulenkerne 17, 18, 19, 20.

Die jeweilige Achse der Spulen 15, 16 verläuft im Ausführungsbeispiel der Fig. 1 senkrecht zur Achse des Meßrohrs, also auch in Richtung eines Radius der Querschnittsfläche des Meßrohrs. Die Windungsebenen jeder Spule 15 bzw. 16 sind daher in Fig. 1 waagrecht und verlaufen senkrecht zur Zeichenebene. Die Spulen 15, 16 sind vorzugsweise länglich flach mit rechteckigem Querschnitt.

Die jeweilige Schenkel-Länge der Spulenkerne 17, 18, 19, 20 ist wenig größer als die Länge bzw. Höhe h der Spulen 15, 16. Jeweils ein Schenkel 171, 181 bzw. 191, 201 der zu der Spule 15 bzw. 16 gehörenden Spulenkerne 17, 18 bzw. 19, 20 ist unter Einhaltung eines gegenseitigen Abstands d in der entsprechenden Spule angeordnet. Dieser Abstand d ist bevorzugt größer als 30 mm.

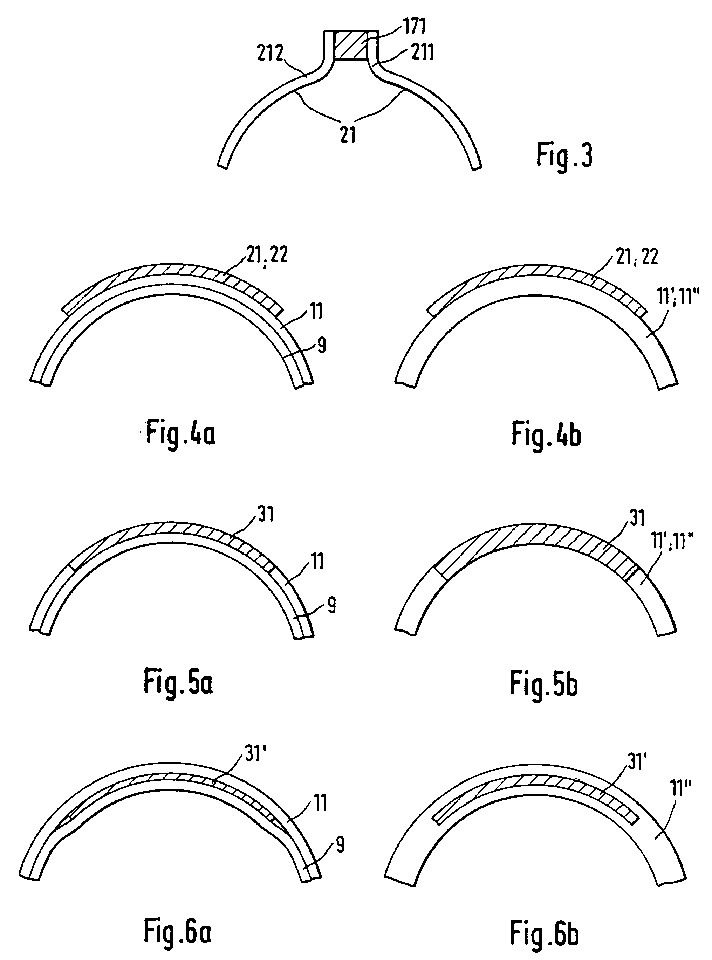

Die Mittel zum Erzeugen eines das Meßrohr durchsetzenden Magnetfelds umfassen als Polschuhe ferner Polbleche 21, 22 aus weichmagnetischem Material, die in Fig. 1 unter und beidseits der jeweiligen Spule 15, 16 in Umfangskreis-Richtung auf der Außenmantelfläche des Meßrohrs unter Einhaltung eines ausreichenden gegenseitigen Abstands D der Enden der Polbleche verlaufen, vgl. auch die Fig. 4.

In Fig. 1 ist von den Polblechen 21, 22 jeweils nur der vordere Teil zu sehen; deren hinterer, gleich großer Teil ist verdeckt. Die in den Spulen 15 bzw. 16 steckenden Schenkel 171, 181 bzw. 191, 201 sind mit dem jeweiligen Polblech 21 bzw. 22 magnetisch gekoppelt.

Die Mittel zum Erzeugen eines das Meßrohr durchsetzenden Magnetfelds umfassen ferner je ein auf jeweils einer Seite der Spulen 15, 16 und der Polbleche 21, 22 angeordnetes und in Fig. 1 auf der Außenmantelfläche des Meßrohrs direkt aufliegendes und, es vollständig umfassend, verlaufendes weichmagnetisches Rückführungsblech 23, 24.

Diese beiden Rückführungsbleche sind also geschlossene Ringe und jeweils über die Spulenkerne 17, 19 bzw. 18, 20 mit dem jeweiligen Polblech 21 bzw. 22 magnetisch gekoppelt. In Fig. 1 wird diese Kopplung von den nicht in der jeweiligen Spule 15 bzw. 16 steckenden Schenkeln 172, 192 bzw. 182, 202 der Spulenkerne 17, 19 bzw. 18, 20 bewirkt.

Der Abstand L der Rückführungsbleche 23, 24 liegt vorzugsweise zwischen dem 0,3-fachen und dem 0,7-fachen, insb. zwischen dem 0,4-fachen und dem 0,6-fachen, der Nennweite.

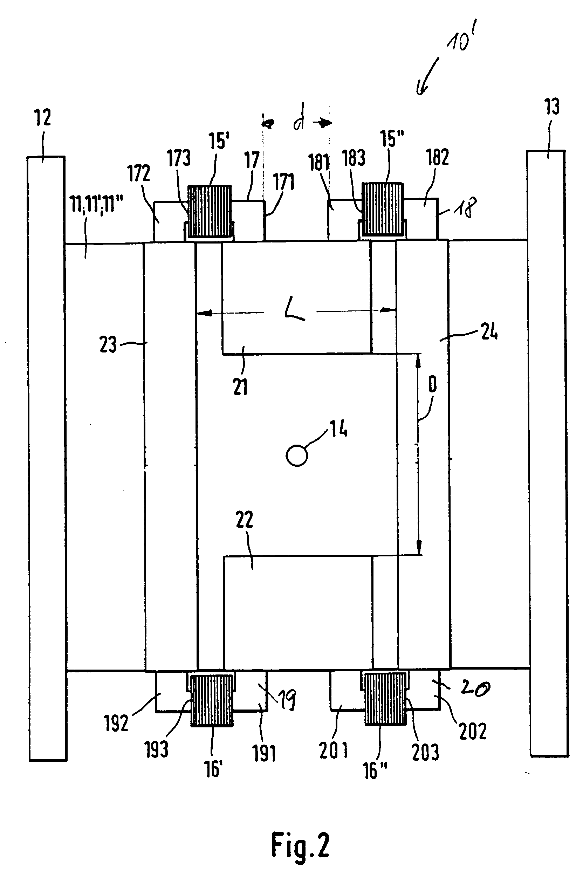

Der in Fig. 2 schematisch gezeigte magnetisch-induktive Durchflußaufnehmer 10' für den Nennweitenbereich oberhalb von 500 mm, insb. oberhalb von 700 mm, unterscheidet sich von dem Durchflußaufnehmer nach Fig. 1 lediglich in der andersartigen Anordnung der Spulen und der Spulenkerne, so daß zur Erläuterung der übrigen Teile von Fig. 2 auf die entsprechende Erläuterung von Fig. 1 verwiesen wird.

In Fig. 2 besteht die der jeweiligen Spule 15 bzw. 16 nach Fig. 1 vergleichbare Spule aus jeweils einem Paar mit ihren Achsen fluchtenden Teilspulen 15', 15'' bzw. 16', 16". Diese Achsen verlaufen parallel zur Achse des Meßrohrs. Die jeweilige Teilspule ist auf den jeweiligen, die Schenkel 171, 172 bzw. 181, 182 bzw. 191, 192 bzw. 201, 202 verbindenden Steg 173 bzw. 183 bzw. 193 bzw. 203 der U-förmigen Spulenkerne 17 bzw. 18, 19 bzw. 20 gewickelt. Die Windungsebenen jeder Teilspule sind daher in Fig. 2 senkrecht und verlaufen auch senkrecht zur Zeichenebene.

Nunmehr sind die Polbleche 21 bzw. 22 mit den jeweiligen, einander zugewandten Schenkeln 171, 181 bzw. 191, 201 und die Rückführungsbleche 23 bzw. 24 mit den jeweiligen, voneinander abgewandten Schenkeln 172, 192 bzw. 182, 202 magnetisch gekoppelt.

Die Richtung des bei Stromfluß von den Teilspulen 17, 18 des in Fig. 2 oberen Spulenpaars erzeugten Magnetfelds ist derart, daß z.B. in der einen der beiden abwechselnd erzeugten Magnetfeldrichtungen das Magnetfeld im Steg 173 nach links und im Steg 183 nach rechts gerichtet ist, Gleichzeitig ist das Magnetfeld dann im Steg 193 der Teilspule 19 nach rechts und das Magnetfeld im Steg 203 der Teilspule 20 nach links gerichtet. In den vier Stegen 173, 183, 193, 203 können diese Magnetfeldrichtungen durch den Wicklungssinn der Teilspulen und/oder durch die Polung der Teilspulen eines Paares untereinander erreicht werden.

In Fig. 3 ist anhand eines auf der Außenmantelfläche des Meßrohrs verlaufenden Polblechs 21 gezeigt, daß die Polbleche in der Nähe der Spulen unterbrochen und die dadurch gebildeten Enden 211, 212 aufgebogen sein können. Diese Enden sind dann mit dem jeweiligen in der Spule steckenden Schenkel des jeweiligen Spulenkerns, z.B. mit dem Schenkel 171, magnetisch gekoppelt, nämlich wie ersichtlich seitlich anstatt an der Stirnfläche der Schenkel der Spulenkerne.

Diese Bildung von mit den entsprechenden Spulenkernen magnetisch gekoppelten Enden ist auch bei auf der Außenmantelfläche verlaufenden Rückführungsblechen möglich; auf eine entsprechende Figur wurde jedoch verzichtet, da solche Enden in zu Fig. 3 analoger Weise vom Fachmann gebildet werden können.

Während die Fig. 4, wie oben schon kurz erwähnt wurde, die Anordnung der Polbleche 21, 22 auf der **Außen**mantelfläche des Metall-Meßrohrs 11 (Fig. 4a) oder des Keramik-Meßrohrs des Kunststoff-Meßrohrs 11'' 11' bzw. (Fig. 4b) zeigt, ist in Fig. 5 eine andere Möglichkeit der Realisierung der Polschuhe veranschaulicht, nämlich deren Ausbildung als Polbereiche 31.

In Fig. 5a ist daher das nicht-ferromagnetische Metall-Meßrohr 11 mit dem in seine Wand eingesetzten, z.B. eingeschweißten oder eingelöteten, Polbereich 31 gezeigt. In Fig. 5b ist der Polbereich 31 im Falle eines Keramik-Meßrohrs 11' ein magnetisch leitfähig gemachter Keramikbereich bzw. im Falle eines Kunststoff-Meßrohrs 11'' ein magnetisch leitfähiger Kunststoffbereich. Diese Bereiche können jeweils durch Beimischung von entsprechenden Metallpulvern während der Herstellung des Meßrohrs erzeugt werden.

Die Fig. 6a zeigt die Anordnung eines Polblechs 31' auf der **Innen**mantelfläche des Metall-Meßrohrs 11, wobei die Polbleche ebenso wie das Metall-Meßrohr 11 durch die Isolierung 9 vom Fluid getrennt sind. Die Fig. 6b zeigt den entsprechenden Fall für ein Kunststoff-Meßrohr 11", bei dem die Polbleche in den Kunststoff eingelassen sind.

Die anhand der Figuren 4 bis 6 veranschaulichten verschiedenen Varianten der Anordnung und der Realisierung der Polbleche ist in vergleichbarer Weise auch auf die Rückführungsbleche anwendbar. Auch dafür wurde auf die Darstellung anhand von Figuren verzichtet, da deren Anordnung vom Fachmann ebenfalls ohne weiteres realisiert werden kann.

Bei allen Ausführungsbeispielen liegt ein von den Polblechen bzw. -bereichen über die Spulenkerne zu den Rückführungsblechen bzw. -bereichen geschlossener Magnetkreis mit niedrigem magnetischem Widerstand vor.

Die Polbleche 21, 22, 31' und/oder die Rückführungsbleche 23, 24 können nicht nur in Form von Einzelblechen, sondern auch als Blechpakete realisiert werden, wie sie aus der Transformatoren- oder der Elektromotoren-Technik bekannt sind. Diese Blechpakete bestehen aus einigen, insb. ca. zehn, übereinandergeschichteten Einzelblechen aus einem weichmagnetischen Material mit entsprechend dem erforderlichen niedrigen magnetischen Widerstand bemessener Breite, z.B. aus sogenannten Kornblechen, deren Oberfläche mit einer dünnen elektrisch isolierenden Schicht versehen ist. Somit sind die einzelnen Bleche des Blechpakets elektrisch gegeneinander isoliert, wodurch Wirbelstromverluste weitgehend reduziert sind.

Das erwähnte Magnetfeld wird mittels einer üblichen Spulenstrom-Generator-Schaltung erzeugt. Hierfür können die in der Literatur vielfach vorbeschriebenen Schaltungen benutzt werden.

Die Meß-Elektroden 12 sind mit einer nicht gezeigten, üblichen Auswerte-Elektronik verbindbar, die das von den Meß-Elektroden abgegriffene Signal in ein dem Volumen-Durchfluß entsprechendes Signal umsetzt. Auch hierfür können die in der umfangreichen Literatur vielfach vorbeschriebenen Schaltungen benutzt werden.

Der jeweilige magnetisch-induktive Durchflußaufnehmer ist schließlich mit einer nicht gezeigten, die Spulen und/oder die Spulenkerne und/oder die Polbleche bzw. -bereiche und/oder die Rückführungsbleche bzw. -bereiche umgebenden Umhüllung, insb. mit einem Metallgehäuse, vorzugsweise mit magnetischer Abschirmwirkung, versehen. Dieses kann bei Bedarf mit einem Füllstoff gefüllt, z.B. ausgeschäumt, sein.

## Patentansprüche

1. Magnetisch-induktiver Durchflußaufnehmer
- mit einem von einem zu messenden, elektrisch leitfähigen Fluid durchströmten, nicht-ferromagnetischen, innen mit einer Isolierschicht (9) ausgekleideten Metall-Meßrohr (11),
-- dessen Nennweite 200 mm bis 700 mm beträgt,
-- das mindestens zwei Meß-Elektroden (14) aufweist, und
-- an dem Mittel zum Erzeugen eines das Metall-Meßrohr (11) durchsetzenden Magnetfelds angeordnet sind, die umfassen:
--- an der Außenmantelfläche des Metall-Meßrohrs (11) diametral einander gegenüberliegende, nicht-sattelförmige Spulen (15, 16),
--- Spulenkerne (17, 18, 19, 20),
--- Polschuhe aus weichmagnetischem Material, die beidseits der jeweiligen nicht-sattelförmigen Spule in Umfangskreis-Richtung entweder auf der Außen- oder der Innenmantelfläche des Metall-Meßrohrs (11) als Polbleche (21, 22) oder als in das Metall-Meßrohr eingesetzte Polbereiche (31, 31') unter Einhaltung eines ausreichenden gegenseitigen Abstands (D) ihrer Enden verlaufen,
--- entweder je ein auf jeweils einer Seite der Spulen und der Polbleche bzw. -bereiche angeordnetes, auf der Außen- oder der Innenmantelfläche des Metall-Meßrohrs (11) aufliegendes, dieses vollständig umfassendes weichmagnetisches Rückführungsblech (23, 24)
--- oder je einen auf jeweils einer Seite der Spulen und der Polbleche bzw. -bereiche in das Metall-Meßrohr eingesetzten, dieses vollständig umfassenden weichmagnetischen Rückführungsbereich,
---- welche Rückführungsbleche bzw. -bereiche jeweils über die Spulenkerne (17, 18, 19, 20) mit den Polblechen (21, 22) bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

2. Magnetisch-induktiver Durchflußaufnehmer
- mit einem von einem zu messenden, elektrisch leitfähigen Fluid durchströmten Keramik-Meßrohr (11') bzw. Kunststoff-Meßrohr (11"),
-- dessen Nennweite 200 mm bis 700 mm beträgt,
-- das mindestens zwei Meß-Elektroden (14) aufweist, und
-- an dem Mittel zum Erzeugen eines das Keramik-Meßrohr bzw. das Kunststoff-Meßrohr (11) durchsetzenden Magnetfelds angeordnet sind, die umfassen:
--- an der Außenmantelfläche des Keramik-Meßrohr bzw. des Kunststoff-Meßrohrs diametral einander gegenüberliegende, nicht-sattelförmige Spulen (15, 16),
--- Spulenkerne (17, 18, 19, 20),
--- Polschuhe aus weichmagnetischem Material, die beidseits der jeweiligen Spule in Umfangskreis-Richtung
---- entweder in das Kunststoff-Meßrohr (11") als Polbereiche (31') eingebettet sind
---- oder auf der Außenmantelfläche des Keramik-Meßrohr (11') bzw. des Kunststoff-Meßrohrs (11") als Polbleche (21, 22) verlaufen
---- oder als dessen magnetisch leitfähige Polbereiche (31) verlaufen und deren Enden einen ausreichenden gegenseitigen Abstands (D) einhalten,
--- entweder je ein auf jeweils einer Seite der Spulen und der Polbleche bzw. -bereiche in das Kunststoff-Meßrohr eingebettetes oder auf der Außenmantelfläche des Keramik-Meßrohr bzw. des Kunststoff-Meßrohrs aufliegendes weichmagnetisches Rückführungsblech (23, 24)
--- oder je einen auf jeweils einer Seite der Spulen und der Polbleche bzw. -bereiche angeordneten, einen weichmagnetisch leitfähigen Abschnitt des Keramik-Meßrohrs bzw. des Kunststoff-Meßrohrs bildenden Rückführungsbereich,
---- welche Rückführungsbleche bzw. -bereiche jeweils über die Spulenkerne (17, 18, 19, 20) mit den Polblechen bzw. -bereichen (21, 22) magnetisch gekoppelt sind und das Keramik-Meßrohr bzw. das Kunststoff-Meßrohr vollständig umfassen, und
- mit einer die Spulen und/oder die Spulenkerne und/oder die Polbleche bzw. -bereiche und/oder die Rückführungsbleche bzw. -bereiche umgebenden Umhüllung.

3. Magnetisch-induktiver Durchflußaufnehmer
- mit einem von einem zu messenden, elektrisch leitfähigen Fluid durchströmten, nicht-ferromagnetischen, innen mit einer Isolierschicht (9) ausgekleideten Metall-Meßrohr (11),
-- dessen Nennweite größer als 500 mm ist,
-- das mindestens zwei Meß-Elektroden (14) aufweist, und
-- an dem Mittel zum Erzeugen eines das Metall-Meßrohr (11) durchsetzenden Magnetfelds angeordnet sind, die umfassen:
--- an der Außenmantelfläche des Metall-Meßrohrs (11) diametral einander gegenüberliegende, nicht-sattelförmige Paare von Teilspulen (15', 16'; 15'', 16''),
---- deren jeweilige Achsen fluchten und parallel zur Achse des Metall-Meßrohrs (11) verlaufen,
--- pro Teilspule einen U-förmigen Spulenkern (17, 18, 19, 20),
---- auf dessen jeweiligen seine Schenkel verbindenden Steg (173, 183, 193, 203) die jeweilige Teilspule (15', 15"; 16', 16") gewickelt ist,
--- Polschuhe aus weichmagnetischem Material, die beidseits des jeweiligen Paares von Teilspulen in Umfangskreis-Richtung entweder auf der Außen- oder der Innenmantelfläche des Metall-Meßrohrs (11) als Polbleche (21, 22) oder als in das Metall-Meßrohr eingesetzte Polbereiche (31, 31') unter Einhaltung eines ausreichenden gegenseitigen Abstands (D) ihrer Enden verlaufen,
--- entweder je ein auf jeweils einer Seite der Spulen und der Polbleche bzw. -bereiche angeordnetes, auf der Außen- oder der Innenmantelfläche des Metall-Meßrohrs (11) aufliegendes, dieses vollständig umfassendes weichmagnetisches Rückführungsblech (23, 24)
--- oder je einen auf jeweils einer Seite der Paare von Teilspulen und der Polbleche bzw. -bereiche in das Metall-Meßrohr eingesetzten, dieses vollständig umfassenden weichmagnetischen Rückführungsbereich,
---- welche Rückführungsbleche bzw. -bereiche jeweils über die Spulenkerne (17, 18, 19, 20) mit den Polblechen (21, 22) bzw. -bereichen magnetisch derart gekoppelt sind, daß
----- die jeweiligen, einander zugewandten Schenkel (171, 181, 191, 201) der Spulenkerne mit den Polblechen (21, 22) bzw. -bereichen und die jeweiligen, voneinander abgewandten Schenkel (172, 192, 182, 202) mit den Rückführungsblechen (23, 24) bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

4. Magnetisch-induktiver Durchflußaufnehmer
- mit einem von einem zu messenden, elektrisch leitfähigen Fluid durchströmten Keramik-Meßrohr (11') bzw. Kunststoff-Meßrohr (11"),
-- dessen Nennweite größer als 500 mm ist,
-- das mindestens zwei Meß-Elektroden (14) aufweist, und
-- an dem Mittel zum Erzeugen eines das Keramik-Meßrohr bzw. das Kunststoff-Meßrohr (11) durchsetzenden Magnetfelds angeordnet sind, die umfassen:
--- an der Außenmantelfläche des Keramik-Meßrohr bzw. des Kunststoff-Meßrohrs diametral einander gegenüberliegende, nicht-sattelförmige Paare von Teilspulen (15', 16'; 15", 16"),
---- deren jeweilige Achsen fluchten und parallel zur Achse des Keramik-Meßrohr des Kunststoff-Meßrohrs (11) verlaufen,
--- pro Teilspule einen U-förmigen Spulenkern (17, 18, 19, 20),
---- auf dessen jeweiligen seine Schenkel verbindenden Steg (173, 183, 193, 203) die jeweilige Teilspule (15', 15"; 16', 16") gewickelt ist,
--- Polschuhe aus weichmagnetischem Material, die beidseits des jeweiligen Paares von Teilspulen in Umfangskreis-Richtung
---- entweder in das Kunststoff-Meßrohr (11") als Polbereiche (31') eingebettet sind
---- oder auf der Außenmantelfläche des Keramik-Meßrohr (11') bzw. des Kunststoff-Meßrohrs (11") als Polbleche (21, 22) verlaufen
---- oder als dessen magnetisch leitfähige Polbereiche (31) verlaufen und deren Enden einen ausreichenden gegenseitigen Abstands (D) einhalten,
--- entweder je ein auf jeweils einer Seite des Paares von Teilspulen und der Polbleche bzw. -bereiche in das Kunststoff-Meßrohr eingebettetes oder auf der Außenmantelfläche des Keramik-Meßrohr bzw. des Kunststoff-Meßrohrs aufliegendes weichmagnetisches Rückführungsblech (23, 24)
--- oder je einen auf jeweils einer Seite des Paares von Teilspulen und der Polbleche bzw. -bereiche angeordneten, einen weichmagnetisch leitfähigen Abschnitt des Keramik-Meßrohrs bzw. des Kunststoff-Meßrohrs bildenden Rückführungsbereich,
---- welche Rückführungsbleche bzw. -bereiche das Keramik-Meßrohr bzw. das Kunststoff-Meßrohr vollständig umfassen und jeweils über die Spulenkerne (17, 18, 19, 20) mit den Polblechen bzw. -bereichen (21, 22) magnetisch derart gekoppelt sind, daß
----- die jeweiligen, einander zugewandten Schenkel (171, 181, 191, 201) der Spulenkerne mit den Polblechen (21, 22) bzw. -bereichen und die jeweiligen, voneinander abgewandten Schenkel (172, 192, 182, 202) mit den Rückführungsblechen (23, 24) bzw. -bereichen magnetisch gekoppelt sind, und
- mit einer die Spulen und/oder die Spulenkerne und/oder die Polbleche bzw. -bereiche und/oder die Rückführungsbleche bzw. -bereiche umgebenden Umhüllung.

5. Magnetisch-induktiver Durchflußaufnehmer nach Anspruch 1 oder 2, bei dem vorgesehen sind:
- zwei Spulen (15, 16), deren jeweilige Achse senkrecht zur Achse des Meßrohrs (11) verläuft,
- pro Spule zwei U-förmige Spulenkerne (17, 18, 19, 20),
-- deren Schenkel-Länge wenig größer als die Länge (h) der Spulen ist,
-- deren jeweils einer Schenkel (171, 181, 191, 201) unter Einhaltung eines gegenseitigen Abstands in der jeweiligen Spule angeordnet und mit den Polblechen (21, 22) bzw. -bereichen magnetisch gekoppelt ist und
-- deren jeweils nicht in der jeweiligen Spule (15, 16) steckender Schenkel (172, 192; 182, 202) mit den Rückführungsblechen (23, 24) bzw. -bereichen magnetisch gekoppelt ist.

6. Magnetisch-induktiver Durchflußaufnehmer nach einem der Ansprüche 3 bis 5, bei dem die zu einer Spule gehörenden beiden U-förmigen Spulenkerne zu einem einzigen E-förmigen Spulenkern vereinigt sind.

7. Magnetisch-induktiver Durchflußaufnehmer nach einem der Ansprüche 1 bis 4, bei dem die Polbleche (21, 22) in der Nähe der Spulen (15, 16) unterbrochen und die dadurch gebildeten Enden (211, 212) aufgebogen sind und diese Enden mit dem jeweiligen in der Spule steckenden Schenkel des jeweiligen Spulenkerns magnetisch gekoppelt sind.

8. Magnetisch-induktiver Durchflußaufnehmer nach einem der Ansprüche 1 bis 4, bei dem die Rückführungsbleche (23, 24) in der Nähe der Spulen (15, 16) unterbrochen und die dadurch gebildeten Enden aufgebogen sind und diese Enden mit dem jeweiligen nicht in der Spule steckenden Schenkel des jeweiligen Spulenkerns magnetisch gekoppelt sind.

9. Magnetisch-induktiver Durchflußaufnehmer nach einem der Ansprüche 1 bis 4 mit einem Metallgehäuse, vorzugsweise mit magnetischer Abschirmwirkung, als Umhüllung.

## Claims

1. An electromagnetic flow sensor comprising
- a nonferromagnetic metallic measuring tube (11) through which flows an electrically conductive fluid to be measured and whose inside surface is lined with an insulating layer (9),
-- whose nominal diameter is 200 mm to 700 mm,
-- which has at least two measuring electrodes (14), and
-- at which means are provided for generating a magnetic field passing through the metallic measuring tube (11) which comprise:
--- non-saddle-shaped coils (15, 16) disposed diametrically opposite to each other at the outside surface of the metallic measuring tube (11),
--- coil cores (17, 18, 19, 20),
--- pole pieces of soft magnetic material which extend on both sides of the respective non-saddle-shaped coil in the circumferential direction either as pole stampings (21, 22) on the inside or outside surface of the metallic measuring tube (11) or as pole regions (31, 31') put in the metallic measuring tube, with their ends separated by a sufficient distance (D),
--- either two soft magnetic return-path stampings (23, 24) each disposed on one side of the coils and of the pole stampings or regions and resting on the outside or inside surface of the metallic measuring tube (11) and completely surrounding the latter,
--- or two soft magnetic return-path regions each put in and completely surrounding the metallic measuring tube on one side of the coils and of the pole stampings or regions,
---- said return-path stampings or regions being respectively magnetically coupled via the coil cores (17, 18, 19, 20) to the pole stampings (21, 22) or regions, and
- an enclosure surrounding the coils and/or the coil cores and/or the pole stampings or regions and/or the return-path stampings or regions.

2. An electromagnetic flow sensor comprising
- a ceramic measuring tube (11') or plastic measuring tube (11") through which flows an electrically conductive fluid to be measured,
-- whose nominal diameter is 200 mm to 700 mm,
-- which has at least two measuring electrodes (14), and
-- at which means are provided for generating a magnetic field passing through the ceramic measuring tube or plastic measuring tube (11) which comprise:
--- non-saddle-shaped coils (15, 16)) disposed diametrically opposite to each other at the outside surface of the ceramic measuring tube or plastic measuring tube,
--- coil cores (17, 18, 19, 20),
--- pole pieces of soft magnetic material which extend on both sides of the respective coil in the circumferential direction and
---- either are embedded as pole regions (31') in the plastic measuring tube (11")
---- or extend as pole stampings (21, 22) on the outside surface of the ceramic measuring tube (11') or plastic measuring tube (11")
---- or extend as magnetically conductive pole regions (31) of the measuring tube and whose ends are separated by a sufficient distance (D),
--- either two soft magnetic return-path stampings (23, 24) each embedded in the plastic measuring tube or resting on the outside surface of the ceramic measuring tube or plastic measuring tube on one side of the coils and of the pole stampings or regions
--- or two return-path regions each provided on one side of the coils and of the pole stampings or regions and forming a soft magnetic conductive section of the ceramic measuring tube or plastic measuring tube,
---- said return-path stampings or regions being respectively magnetically coupled via the coil cores (17, 18, 19, 20) to the pole stampings or regions (21, 22) and completely surrounding the ceramic measuring tube or plastic measuring tube, and
- an enclosure surrounding the coils and/or the coil cores and/or the pole stampings or regions and/or the return-path stampings or regions.

3. An electromagnetic flow sensor comprising
- a nonferromagnetic metallic measuring tube (11) through which flows an electrically conductive fluid to be measured and whose inside surface is lined with an insulating layer (9),
-- whose nominal diameter is greater than 500 mm,
-- which has at least two measuring electrodes (14), and
-- at which means are provided for generating a magnetic field passing through the metallic measuring tube (11) which comprise:
--- non-saddle-shaped pairs of coil sections (15', 16'; 15", 16") disposed diametrically opposite to each other at the outside surface of the metallic measuring tube (11),
---- whose respective axes are in line and extend parallel to the axis of the metallic measuring tube (11),
--- one U-shaped coil core (17, 18, 19, 20) per coil section
---- which has the respective coil section (15', 15"; 16', 16") wound on its portion (173, 183, 193, 203) interconnecting its legs,
--- pole pieces of soft magnetic material which extend on both sides of the respective pair of coil sections in the circumferential direction either as pole stampings (21, 22) on the outside or inside surface of the metallic measuring tube (11) or as pole regions (31, 31') put in the metallic measuring tube, with their ends separated by a sufficient distance (D),
--- either two soft magnetic return-path stampings (23, 24) each disposed on one side of the coils and the pole stamping or regions and resting on on the outside or inside surface of the metallic measuring tube (11) and completely surrounding the latter
--- or two soft magnetic return-path regions each put in the metallic measuring tube on one side of the pairs of coil sections and of the pole stampings or regions and completely surrounding the metallic measuring tube,
---- said return-path stampings or regions being respectively magnetically coupled via the coil cores (17, 18, 19, 20) to the pole stampings (21, 22) or regions such that
----- the respective core legs (171, 181, 191, 201) facing toward each other are magnetically coupled to the pole stampings (21, 22) or regions, and the respective core legs (172, 192, 182, 202) facing away from each other are magnetically coupled to the return-path stampings (23, 24) or regions, and
- an enclosure surrounding the coils and/or the coil cores and/or the pole stampings or regions and/or the return-path stampings or regions.

4. An electromagnetic flow sensor comprising
- a ceramic measuring tube (11') or plastic measuring tube (11") through which flows an electrically conductive fluid to be measured,
-- whose nominal diamter is greater than 500 mm,
-- which has at least two measuring electrodes (14), and
-- at which means are provided for generating a magnetic field passing through the ceramic measuring tube or plastic measuring tube (11) which comprise:
--- non-saddle-shaped pairs of coil sections (15', 16'; 15", 16") disposed diametrically opposite to each other at the outside surface of the ceramic measuring tube or plastic measuring tube
---- whose respective axes are in line and extend parallel to the axis of the ceramic measuring tube or plastic measuring tube (11),
--- one U-shaped coil core (17, 18, 19, 20) per coil section
---- which has the respective coil section (15', 15", 16', 16") wound on its portion (173, 183, 193, 203) interconnecting its legs,
--- pole pieces of soft magnetic material on both sides of the respective pair of coil sections in the circumferential direction which
---- either are embedded as pole regions (31') in the plastic measuring tube (11")
---- or extend as pole stampings (21, 22) on the outside surface of the ceramic measuring tube (11') or plastic measuring tube (11")
---- or extend as magnetically conductive pole regions (31) of the measuring tube, and whose ends are separated by a sufficient distance (D),
--- either two soft magnetic return-path stampings (23, 24) each embedded in the plastic measuring tube or resting on the outside surface of the ceramic measuring tube or plastic measuring tube on one side of the pair of coil sections and of the pole stampings or regions,
--- or two return-path regions each provided on one side of the pair of coil sections and of the pole stampings or regions and forming a soft-magnetically conductive section of the ceramic mesuring tube or plastic measuring tube,
---- said return-path stampings or regions completely surrounding the ceramic measuring tube or plastic measuring tube and being respectively magnetically coupled via the coil cores (17, 18, 19, 20) to the pole stampings (21, 22) or regions such that
----- the respective core legs (171, 181, 191, 201) facing toward each other are magnetically coupled to the pole stampings (21, 22) or regions, and the respective core legs (172, 192, 182, 202) facing away from each other to the return-path stampings (23, 24) or regions, and
- an enclosure surrounding the coils and/or the coil cores and/or the pole stampings or regions and/or the return-path stampings or regions.

5. An electromagnetic flow sensor as claimed in claim 1 or 2, comprising:
- two coils (15, 16) whose respective axes are perpendicular to the axis of the measuring tube (11), and
- two U-shaped coil cores (17, 18, 19, 20) per coil
-- whose leg length is little greater than the length (h) of the coils,
-- one leg (171, 181, 191, 201) of each of which extends into the respective coil and is magnetically coupled to the pole stampings (21, 22) or regions, with the legs in the respective coils separated by a given distance, and
-- whose respective legs (172, 192; 182, 202) which are not in the respective coils (15, 16) are magnetically coupled to the return-path stampings (23, 24) or regions.

6. An electromagnetic flow sensor as claimed in any one of claims 3 to 5 wherein the two U-shaped coil cores belonging to a coil are united to form a single E-shaped coil core.

7. An electromagnetic flow sensor as claimed in any one of claims 1 to 4 wherein the coil stampings (21, 22) are interrupted in the vicinity of the coils (15, 16), and wherein the ends (211, 212) formed thereby are bent up and magnetically coupled to that leg of the respective coil core which is in the coil.

8. An electromagnetic flow sensor as claimed in any one of claims 1 to 4 wherein the return-path stampings (23, 24) are interrupted in the vicinity of the coils (15, 16), and wherein the ends formed thereby are bent up and magnetically coupled to that leg of the respective coil core which is not in the coil.

9. An electromagnetic flow sensor as claimed in any one of claims 1 to 4 wherein the enclosure is a metal casing, preferably a magnetically shielded casing.

## Revendications

1. Capteur de débit magnéto-inductif comprenant :
- un tube de mesure métallique (11) non ferromagnétique traversé par un fluide électroconducteur à mesurer, recouvert à l'intérieur d'une couche isolante (9),
-- tube de mesure dont le diamètre nominal est compris entre 200 mm et 700 mm,
-- qui comporte au moins de deux électrodes de mesure (14), et
-- tube de mesure sur lequel sont disposés des moyens pour produire un champ magnétique traversant le tube de mesure métallique (11), lesdits moyens comprenant :
--- des bobines (15, 16) n'ayant pas la forme de sellettes, diamétralement opposées l'une par rapport à l'autre, disposées sur la surface latérale extérieure du tube de mesure métallique (11),
--- des noyaux de bobines (17, 18, 19, 20),
--- des pièces polaires fabriquées dans un matériau magnétiquement doux, qui, des deux côtés de la bobine respective non en forme de sellette, dans le sens de la circonférence, soit s'étendent sur la surface latérale extérieure ou intérieure du tube de mesure métallique (11) et servent de tôles polaires (21, 22), soit sont insérées dans le tube de mesure métallique et servent de zones polaires (31, 31'), en respectant un intervalle (D) suffisant entre leurs extrémités,
--- ou une tôle de rétroaction (23, 24) magnétique-ment douce, disposée sur un côté, respectivement, des bobines et des tôles polaires ou des zones polaires, venant en appui sur la surface latérale extérieure ou intérieure du tube de mesure métallique (11) et l'entourant complètement,
--- ou une zone de rétroaction magnétiquement douce, disposée sur un côté, respectivement, des bobines et des tôles polaires ou des zones polaires, insérée dans le tube de mesure métallique et l'entourant complètement,
---- lesquelles tôles ou zones de rétroaction étant couplées magnétiquement, via les noyaux de bobines (17, 18, 19, 20), respectivement aux tôles polaires (21, 22) ou aux zones polaires, et
- une enveloppe entourant les bobines et/ou les noyaux de bobines et/ou les tôles polaires ou zones polaires, et/ou les tôles de rétroaction ou zones de rétroaction.

2. Capteur de débit magnéto-inductif comprenant :
- un tube de mesure (11') en céramique ou un tube de mesure (11") en matière plastique traversé par un fluide électroconducteur à mesurer,
-- tube de mesure dont le diamètre nominal est compris entre 200 mm et 700 mm,
-- qui comporte au moins de deux électrodes de mesure (14), et
-- tube de mesure sur lequel sont disposés des moyens pour produire un champ magnétique traversant le tube de mesure (11') en céramique ou le tube de mesure (11") en matière plastique, lesdits moyens comprenant :
--- des bobines (15, 16) n'ayant pas la forme de sellettes, diamétralement opposées l'une par rapport à l'autre, disposées sur la surface latérale extérieure du tube de mesure en céramique ou du tube de mesure en matière plastique,
--- des noyaux de bobines (17, 18, 19, 20),
--- des pièces polaires fabriquées dans un matériau magnétiquement doux, qui sont placées des deux côtés de la bobine respective, dans le sens de la circonférence, et qui
---- soit sont noyées dans le tube de mesure (11") en matière plastique et servent de zones polaires (31'),
---- soit s'étendent sur la surface latérale extérieure du tube de mesure (11') en céramique ou du tube de mesure (11") en matière plastique et servent de tôles polaires (21, 22),
---- soit s'étendent en servant de zones polaires (31) magnétiquement conductrices du tube de mesure, et dont les extrémités respectent entre elles un intervalle (D) suffisant,
--- ou une tôle de rétroaction (23, 24) magnétiquement douce, disposée sur un côté, respectivement, des bobines et des tôles polaires ou des zones polaires, noyée dans le tube de mesure en matière plastique, ou s'appuyant sur la surface latérale extérieure du tube de mesure en céramique ou du tube de mesure en matière plastique,
--- ou une zone de rétroaction, disposée sur un côté, respectivement, des bobines et des tôles polaires ou des zones polaires, formant un segment conducteur, magnétiquement doux, du tube de mesure en céramique ou du tube de mesure en matière plastique,
---- lesquelles tôles ou zones de rétroaction étant couplées magnétiquement, via les noyaux de bobines (17, 18, 19, 20), respectivement aux tôles polaires ou aux zones polaires (21, 22), et entourant complètement le tube de mesure en céramique ou le tube de mesure en matière plastique, et
- une enveloppe entourant les bobines et/ou les noyaux de bobines et/ou les tôles polaires ou zones polaires et/ou les tôles de rétroaction ou zones de rétroaction.

3. Capteur de débit magnéto-inductif comprenant :
- un tube de mesure métallique (11) non ferromagnétique traversé par un fluide électroconducteur à mesurer, recouvert à l'intérieur par une couche isolante (9),
-- tube de mesure dont le diamètre nominal est supérieur à 500 mm,
-- qui comporte au moins de deux électrodes de mesure (14), et
-- tube de mesure sur lequel sont disposés des moyens pour produire un champ magnétique traversant le tube de mesure (11), lesdits moyens comprenant :
--- des paires de bobines partielles (15', 16' ; 15", 16") n'ayant pas la forme de sellettes, diamétralement opposées l'une par rapport à l'autre, disposées sur la surface latérale extérieure du tube de mesure métallique (11),
---- bobines partielles dont les axes respectifs sont alignés et s'étendent parallèlement à l'axe du tube de mesure (11),
--- pour chaque bobine partielle, un noyau de bobine (17, 18, 19, 20) en forme de U,
---- noyau de bobine, sur l'âme (173, 183, 193, 203) respective duquel, reliant ses branches, est entourée la bobine partielle respective (15', 15" ; 16', 16"),
--- des pièces polaires fabriquées dans un matériau magnétiquement doux, qui, des deux côtés de la paire respective de bobines partielles, dans le sens de la circonférence, soit s'étendent sur la surface latérale extérieure ou intérieure du tube de mesure métallique (11) et servent de tôles polaires (21, 22), soit sont insérées dans le tube de mesure métallique et servent de zones polaires (31, 31'), en respectant un intervalle (D) suffisant entre leurs extrémités,
--- ou une tôle de rétroaction (23, 24) magnétiquement douce, disposée sur un côté, respectivement, des bobines et des tôles polaires ou des zones polaires, venant en appui sur la surface latérale extérieure ou intérieure du tube de mesure métallique (11) et l'entourant complètement,
--- ou une zone de rétroaction magnétiquement douce, disposée sur un côté, respectivement, des paires de bobines partielles et des tôles polaires ou des zones polaires, insérée dans le tube de mesure métallique et l'entourant complètement,
---- lesquelles tôles ou zones de rétroaction étant couplées magnétiquement, via les noyaux de bobines (17, 18, 19, 20), respectivement aux tôles polaires (21, 22) ou aux zones polaires, de telle sorte que
----- les branches respectives (171, 181, 191, 201), tournées l'une vers l'autre, sont couplées magnétiquement aux tôles polaires (21, 22) ou aux zones polaires, et les branches respectives (172, 192, 182, 202), placées à l'opposé l'une de l'autre, sont couplées magnétiquement aux tôles de rétro-action (23, 24) ou aux zones de rétro-action, et
- une enveloppe entourant les bobines et/ou les noyaux de bobines et/ou les tôles polaires ou zones polaires, et/ou les tôles de rétroaction ou zones de rétroaction.

4. Capteur de débit magnéto-inductif comprenant :
- un tube de mesure (11') en céramique ou un tube de mesure (11") en matière plastique traversé par un fluide électroconducteur à mesurer,
-- tube de mesure dont le diamètre nominal est supérieur à 500 mm,
-- qui comporte au moins de deux électrodes de mesure (14), et
-- tube de mesure sur lequel sont disposés des moyens pour produire un champ magnétique traversant le tube de mesure (11') en céramique ou le tube de mesure (11") en matière plastique, lesdits moyens comprenant :
--- des paires de bobines partielles (15', 16' ; 15", 16") n'ayant pas la forme de sellettes, diamétralement opposées l'une par rapport à l'autre, disposées sur la surface latérale extérieure du tube de mesure en céramique ou du tube de mesure en matière plastique,
--- bobines partielles dont les axes respectifs sont alignés et s'étendent parallèlement à l'axe du tube de mesure (11') en céramique ou du tube de mesure (11") en matière plastique,
--- pour chaque bobine partielle, un noyau de bobine (17, 18, 19, 20) en forme de U,
---- noyau de bobine sur l'âme (173, 183, 193, 203) respective duquel, reliant ses branches, est entourée la bobine partielle respective (15', 15" ; 16', 16"),
--- des pièces polaires fabriquées dans un matériau magnétiquement doux, qui, des deux côtés de la paire respective de bobines partielles, dans le sens de la circonférence,
---- soit sont noyées dans le tube de mesure (11") en matière plastique et servent de zones polaires (31'),
---- soit s'étendent sur la surface latérale extérieure du tube de mesure (11') en céramique ou du tube de mesure (11") en matière plastique et servent de tôles polaires (21, 22),
---- soit s'étendent en servant de zones polaires (31) magnétiquement conductrices et dont les extrémités respectent entre elles un intervalle (D) suffisant,
--- ou une tôle de rétroaction (23, 24) magnétiquement douce qui, disposée sur un côté, respectivement, de la paire de bobines et des tôles polaires ou des zones polaires, soit est noyée dans le tube de mesure en matière plastique, soit est en appui sur la surface latérale extérieure du tube de mesure en céramique ou du tube de mesure en matière plastique,
--- ou une zone de rétroaction disposée sur un côté, respectivement, de la paire de bobines partielles et des tôles polaires ou des zones polaires, et constituant un segment conducteur, magnétiquement doux, du tube de mesure en céramique ou du tube de mesure en matière plastique,
---- lesquelles tôles ou zones de rétroaction entourent complètement le tube de mesure en céramique ou le tube de mesure en matière plastique, et sont couplées magnétiquement, via les noyaux de bobines (17, 18, 19, 20), respectivement aux tôles polaires (21, 22) ou aux zones polaires, de façon telle que
----- les branches respectives (171, 181, 191, 201), tournées l'une vers l'autre, des noyaux de bobines sont couplées magnétiquement aux tôles polaires (21, 22) ou aux zones polaires, et les branches respectives (172, 192, 182, 202), placées à l'opposé l'une de l'autre, sont couplées magnétiquement aux tôles de rétroaction (23, 24) ou aux zones de rétroaction, et
- une enveloppe entourant les bobines et/ou les noyaux de bobines et/ou les tôles polaires ou zones polaires, et/ou les tôles de rétroaction ou zones de rétroaction.

5. Capteur de débit magnéto-inductif selon la revendication 1 ou 2, dans lequel il est prévu :
- deux bobines (15, 16) dont l'axe respectif s'étend perpendiculairement à l'axe du tube de mesure (11),
- pour chaque bobine, deux noyaux de bobines (17, 18, 19, 20) en forme de U,
-- noyaux dont 'la longueur de branche est inférieure à la longueur (h) des bobines,
-- noyaux dont une branche (171, 181, 191, 201) est à chaque fois disposée dans la bobine respective, en respectant un intervalle entre les branches, ladite branche étant couplée magnétiquement aux tôles polaires (21, 22) ou aux zones polaires, et
-- noyaux dont la branche (172, 192 ; 182, 202) ne venant pas se ficher dans la bobine respective (15, 16) est couplée magnétiquement aux tôles de rétro-action (23, 24) ou aux zones de rétroaction.

6. Capteur de débit magnéto-inductif selon l'une quelconque des revendications 3 à 5, dans lequel les deux noyaux de bobines, en forme de U, faisant partie d'une bobine, sont réunis pour former un seul noyau de bobine en forme de E.

7. Capteur de débit magnéto-inductif selon l'une quelconque des revendications 1 à 4, dans lequel les tôles polaires (21, 22) sont interrompues à proximité des bobines (15, 16), et les extrémités (211, 212) ainsi formées sont recourbées, et ces extrémités sont couplées magnétiquement à la branche respective venant se ficher dans la bobine du noyau de bobine respectif.

8. Capteur de débit magnéto-inductif selon l'une quelconque des revendications 1 à 4, dans lequel les tôles de rétroaction (23, 24) sont interrompues à proximité des bobines (15, 16), et les extrémités ainsi formées sont recourbées, et ces extrémités sont couplées magnétiquement à la branche respective ne venant pas se ficher dans la bobine du noyau de bobine respectif.

9. Capteur de débit magnéto-inductif selon l'une quelconque des revendications 1 à 4, comprenant un carter métallique ayant, de préférence, un effet de blindage magnétique et servant d'enveloppe.
